# EUROPEAN PATENT APPLICATION

(11) **EP 4 648 467 A1**
(43) Date of publication of application: **12.11.2025**
(21) Application number: 23913909.0
(22) Date of filing: 03.01.2023
(51) Int. Cl.: H04W 24/08

(54) **METHOD AND APPARATUS FOR TRANSMITTING EARLY MEASUREMENT REPORT, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2023/070115
(87) International publication number: WO 2024/145746

(57) **Abstract**

Provided in the present disclosure are a method and apparatus for transmitting an early measurement report (EMR), and a readable storage medium. The method comprises: determining the state of a first measurement result at a first time, wherein the first measurement result is a measurement result of early measurement executed by a user equipment prior to the first time; and sending a corresponding EMR to a network device according to the state of the first measurement result. In the method of the present disclosure, a user equipment determines the state of a first measurement result of early measurement, and then sends a corresponding EMR to a network device according to whether the state of the first measurement result is reliable, so as to provide the network device with related information of the measurement result that can be referred to, thereby facilitating the quick establishment of a connection or a rational operation by the network device.

## Description

### TECHNICAL FIELD

The present disclosure relates to the technical field of wireless communication, and in particular, to a method and apparatus for transmitting an early measurement report and a readable storage medium.

### BACKGROUND

In New Radio (NR), User Equipment (UE) can provide an Early Measurement Report (EMR) to the network device.

### SUMMARY

The present disclosure provides a method and apparatus for transmitting an early measurement report, and a readable storage medium.

In a first aspect, the present disclosure provides a method for sending an early measurement report, which is performed by a user equipment, and the method includes:
determining a state of a first measurement result at a first time, where the first measurement result is a measurement result of an early measurement performed by the user equipment before the first time; and
sending a corresponding early measurement report (EMR) to the network device according to the state of the first measurement result.

In the methods in the present disclosure, the user equipment determines the state of the first measurement result of the early measurement, and then sends the corresponding EMR to the network device according to whether the state of the first measurement result is reliable, so as to provide the network device with relevant information of the referable measurement result, which is conducive to the rapid establishment of the connection or the reasonable operation of the network device.

In some possible implementations, determining the state of the first measurement result at the first time includes:
determining the state of the first measurement result according to at least one of the first time and a first duration.

In some possible implementations, the first duration is a measurement result valid duration defined by a protocol.

In some possible implementations, the first duration is a running duration of a first timer configured by the network device, and the running duration of the first timer corresponds to a valid duration of the measurement result.

In some possible implementations, a start time of the first duration is an end time of running of the second timer, and a running duration of the second timer corresponds to a measurement duration of the early measurement; or
the start time of the first duration is a time when a measurement result of a last early measurement is obtained.

In some possible implementations, determining the state of the first measurement result according to at least one of the first time and the first duration includes at least one of:
in response to that the first time is within a range of the first time, determining that the state of the first measurement result is a first state, where the first state is used to indicate that the first measurement result is valid;
in response to that the first time is outside the range of the first duration and an available measurement result exists, determining that the state of the first measurement result is a second state, where the second state is used to indicate that the first measurement result is invalid and the available measurement result exists;
in response to that the first time is outside the range of the first duration and no available measurement result exists in the user equipment, determining that the state of the first measurement result is a third state, where the third state is used to indicate that the measurement result of the early measurement is invalid.

In some possible implementations, sending the corresponding early measurement report (EMR) to the network device according to the state of the first measurement result includes:
in response to that the state of the first measurement result is the first state, according to a set carrier configured by the network device, determining whether to perform a verification measurement on the set carrier;
sending the EMR to the network device according to at least one of a state of the first measurement result at a second time, a second measurement result obtained by performing the verification measurement on the set carrier, and whether to perform the verification measurement, where the EMR includes the first measurement result or the second measurement result.

In some possible implementations, sending the corresponding early measurement report (EMR) to the network device according to the state of the first measurement result includes:
in response to that the state of the first measurement result is the second state, according to a set carrier configured by the network device, determining whether to perform a verification measurement on the set carrier;
sending the EMR to the network device according to whether a second measurement result of the verification measurement is obtained at a second time, where the EMR includes the second measurement result or indication information for indicating that the measurement result is invalid.

In some possible implementations, the second time is after the user equipment receives msg4 sent by the network device during a random access process.

In some possible implementations, sending the corresponding early measurement report (EMR) to the network device according to the state of the first measurement result includes:
in response to that the state of the first measurement result is the third state, sending the EMR to the network device, where the EMR includes indication information for indicating that the measurement result is invalid.

In some possible implementations, the first time satisfies at least one of:
at or after an end time of a running duration of a second timer;
after receiving a paging message;
after sending msg1 to the network device during a random access process.

In some possible implementations, sending the corresponding early measurement report (EMR) to the network device includes:
after receiving msg4 of a random access process, sending msg5 to the network device, where the msg5 includes the EMR.

In some possible implementations, the method further includes:
receiving measurement configuration information sent by the network device, where the measurement configuration information includes at least one of:
at least one carrier corresponding to the early measurement;
a running duration of a first timer;
a running duration of a second timer;
a set carrier corresponding to a verification measurement;
a priority level corresponding to the at least one carrier.

In some possible implementations, the set carrier is one of:
one or more of the at least one carrier;
one or more carriers with a priority level higher than or equal to a set level in the at least one carrier.

In a second aspect, the present disclosure provides a method for receiving an early measurement report, which is performed by a network device, the method including:
receiving an EMR sent by a user equipment, where the EMR corresponds to a state of a first measurement result of an early measurement performed by the user equipment before a first time.

In the method of the present disclosure, the network device may receive the EMR sent by the user equipment to learn whether the state of the first measurement result is reliable, which is beneficial for rapid establishment of a connection or reasonable operation of the network device.

In some possible implementations, the method further includes:
sending measurement configuration information to the user equipment, where the measurement configuration information includes at least one of:
at least one carrier corresponding to the early measurement;
a running duration of a first timer;
a running duration of a second timer;
a set carrier corresponding to a verification measurement;
a priority level corresponding to the at least one carrier;
where the running duration of the first timer corresponds to a valid time of a measurement result, and the running duration of the second timer corresponds to a measurement duration of the early measurement.

In some possible implementations, the set carrier is one of:
one or more of the at least one carrier;
one or more carriers with a priority level higher than or equal to a set level in the at least one carrier.

In some possible implementations, the EMR includes one of:
a first measurement result;
a second measurement result;
indication information used to indicate that a measurement result is invalid;
where the second measurement result is a measurement result corresponding to a verification measurement performed by the user equipment on a set carrier.

In some possible implementations, receiving an EMR sent by a user equipment in an idle state or an inactive state includes:
receiving msg5 sent by the user equipment, where the msg5 includes the EMR.

In a third aspect, the present disclosure provides an apparatus for sending an early measurement report. The apparatus may be used to execute the steps performed by the user equipment in the first aspect or any possible design of the first aspect. The user equipment may implement the functions of the above methods in the form of a hardware structure, a software module, or a hardware structure plus a software module.

When the apparatus shown in the third aspect is implemented by the software module, the apparatus may include a processing module and a transceiver module coupled to each other, where the processing module can be used for the communication apparatus to perform processing operations, such as generating information/messages to be sent, or processing received signals to obtain information/messages. The transceiver module can be used to support the communication apparatus to communicate.

When executing the steps of the first aspect above, the processing module is configured to determine a state of a first measurement result at a first time, where the first measurement result is a measurement result of an early measurement performed by the user equipment before the first time;
the transceiver module is configured to send a corresponding early measurement report (EMR) to the network device according to the state of the first measurement result.

In a fourth aspect, the present disclosure provides an apparatus for receiving an early measurement report, which may be used to execute the steps performed by the network device in the second aspect or any possible design of the second aspect. The network device may implement the functions of the above methods in the form of a hardware structure, a software module, or a hardware structure plus a software module.

When the apparatus shown in the fourth aspect is implemented by the software module, the apparatus may include a transceiver module, where the transceiver module can be used to support the communication apparatus to communicate.

When executing the steps described in the second aspect above, the transceiver module is configured to receive an EMR sent by the user equipment, where the EMR corresponds to a state of a first measurement result of an early measurement performed by the user equipment before a first time.

In a fifth aspect, the present disclosure provides a user equipment, including a processor and a memory; the memory is configured to store a computer program; the processor is configured to execute the computer program to implement the first aspect or any possible design of the first aspect.

In a sixth aspect, the present disclosure provides a network device, including a processor and a memory; the memory is configured to store a computer program; the processor is used to execute the computer program to implement the second aspect or any possible design of the second aspect.

In a seventh aspect, the present disclosure provides a computer-readable storage medium, which stores instructions (or computer programs, programs), which, when called and executed on a computer, enable the computer to execute the above-mentioned first aspect or any possible design of the first aspect.

In an eighth aspect, the present disclosure provides a computer-readable storage medium, in which instructions (or computer programs, programs) are stored, which, when called and executed on a computer, enable the computer to execute the above-mentioned second aspect or any possible design of the second aspect.

It should be understood that the foregoing general description and the following detailed description are exemplary and explanatory only, and cannot limit the present disclosure.

### BRIEF DESCRIPTION OF THE DRAWINGS

The drawings described herein are used to provide a further understanding of the embodiments of the present disclosure and constitute a part of the present application. The illustrative embodiments of the embodiments of the present disclosure and their descriptions are used to explain the embodiments of the present disclosure and do not constitute an improper limitation on the embodiments of the present disclosure. In the drawings:

The accompanying drawings herein are incorporated in and constitute a part of the specification, illustrate embodiments consistent with the embodiments of the present disclosure, and together with the specification, serve to explain the principles of the embodiments of the present disclosure.
FIG. 1 is a schematic diagram of an architecture of a wireless communication system provided by an embodiment of the present disclosure;
FIG. 2 is a flowchart of a method for sending an early measurement report according to an embodiment of the present disclosure;
FIG. 3 is a schematic diagram of a timeline according to an embodiment of the present disclosure;
FIG. 4 is a flowchart of another method for sending an early measurement report according to an embodiment of the present disclosure;
FIG. 5 is a flowchart of another method for sending an early measurement report according to an embodiment of the present disclosure;
FIG. 6 is a flowchart of another method for sending an early measurement report according to an embodiment of the present disclosure;
FIG. 7 is a flowchart of another method for sending an early measurement report according to an embodiment of the present disclosure;
FIG. 8 is a flowchart of a method for receiving an early measurement report according to an embodiment of the present disclosure;
FIG. 9 is a flowchart of a method for transmitting an early measurement report provided by an embodiment of the present disclosure;
FIG. 10 is a schematic diagram of an apparatus for sending an early measurement report provided by an embodiment of the present disclosure;
FIG. 11 is a block diagram of a user equipment according to an exemplary embodiment;
FIG. 12 is a block diagram of an apparatus for receiving an early measurement report according to an exemplary embodiment;
FIG. 13 is a block diagram of a network device according to an exemplary embodiment.

### DETAILED DESCRIPTION

The embodiments of the present disclosure are now further described in conjunction with the accompanying drawings and specific implementations.

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present disclosure. Rather, they are merely examples of apparatus and method consistent with some aspects of the present disclosure and detailed in the claims.

The terms used in the embodiments in the present disclosure are only for the purpose of describing specific embodiments and are not intended to limit the embodiments in the present disclosure. The singular forms of "a/an" and "the" used in the embodiments and the appended claims in the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments in the present disclosure, such information should not be limited to these terms. These terms are only used to distinguish the same type of information from each other. For example, without departing from the scope of the embodiments in the present disclosure, the first information may also be referred to as the second information, and similarly, the second information may also be referred to as the first information. Depending on the context, the words "if" and "in the case that" as used herein may be interpreted as "at" or "when" or "in response to determination".

Embodiments of the present disclosure are described in detail below, examples of which are shown in the accompanying drawings, where the same or similar reference numerals throughout represent the same or similar elements. The embodiments described below with reference to the accompanying drawings are exemplary and are intended to be used to explain the present disclosure, and should not be construed as limiting the present disclosure.

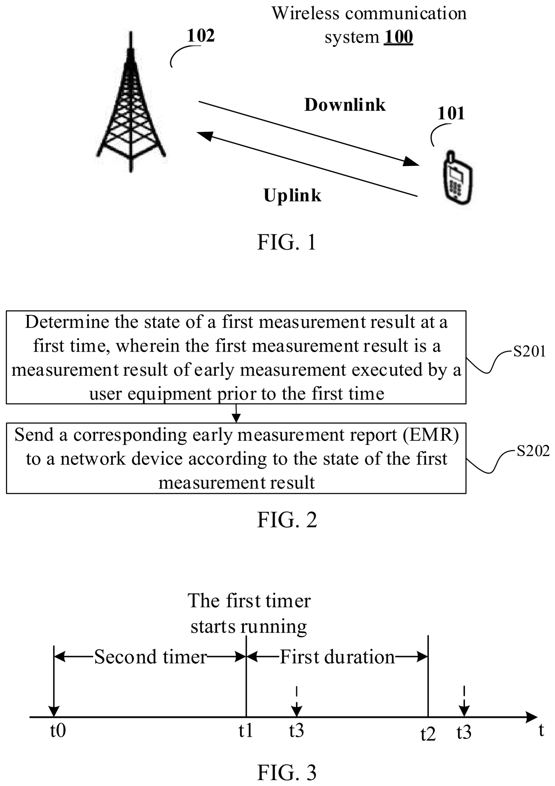

As shown in FIG. 1, a method for transmitting an early measurement report provided by an embodiment of the present disclosure may be applied to a wireless communication system 100, which may include a user equipment 101 and a network device 102. The user equipment 101 is configured to support carrier aggregation and may be connected to multiple component carriers of the network device 102, including a primary component carrier and one or more secondary component carriers.

It should be understood that the above wireless communication system 100 can be applied to both low-frequency scenarios and high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The user equipment 101 shown above may be a terminal, an access terminal, a terminal unit, a terminal station, a mobile station (MS), a remote station, a remote terminal, a mobile terminal, a wireless communication device, a terminal agent or a terminal device, etc. The user equipment 101 may have a wireless transceiver function, and it can communicate with one or more network devices of one or more communication systems (such as wireless communication) and receive network services provided by the network devices, where the network devices include but are not limited to the network device 102 shown in the figure.

The user equipment 101 may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 102 may be an access network device (or an access network site). The access network device refers to a device that provides network access functions, such as a radio access network (RAN) base station, etc. The network device 102 may specifically include a base station (BS), or a base station and a wireless resource management device for controlling the base station, etc. The network device 102 may also include a relay station (relay device), an access point, a base station in a future 5G network, a base station in a future evolved PLMN network, or an NR base station, etc. The network device 102 may be a wearable device or a vehicle-mounted device. The network device 102 may also be a communication chip with a communication module.

For example, the network device 102 includes, but is not limited to, a next-generation base station (gnodeB, gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (for example, a home evolved nodeB, or a home node B, HNB), a baseband unit (BBU), a transmitting point (transmitting and receiving point, TRP), a transmitting point (TP) or a mobile switching center, etc.

According to the relevant protocol, during the running of the timer T331, the user equipment 101 in the RRC idle state (hereinafter referred to as the idle state) or the RRC inactive state (hereinafter referred to as the inactive state) can perform early measurement, that is, EMR-related measurement. When the timer T331 expires, the user equipment 101 can stop the EMR-related measurement.

The user equipment 101 may monitor its corresponding paging message according to the configuration resource of discontinuous reception (DRX), and may initiate random access (RA) after receiving the paging message. If the user equipment 101 receives the paging message and initiates random access a long time after the EMR-related measurement is completed, the EMR-related measurement result may be invalid or unreliable due to the long time.

If the EMR-related measurement result is invalid or unreliable, the user equipment 101 and the network device 102 may not be able to establish a carrier aggregation (CA) or dual connectivity (DC) connection, or may establish an incorrect CA or DC connection.

In view of this, an embodiment of the present disclosure provides a method for sending an early measurement report, which is performed by a user equipment 101. Referring to FIG. 2, FIG. 2 is a method for sending an early measurement report according to an exemplary embodiment, which is performed by a user equipment 101. As shown in FIG. 2, the method includes steps S201 to S202, specifically:

In step S201, the user equipment 101 determines a state of a first measurement result at a first time, where the first measurement result is a measurement result of an early measurement performed by the user equipment before the first time.

In some possible implementations, the early measurement of the user equipment 101 may refer to a measurement performed when the user equipment 101 is in an idle state or an inactive state.

In some possible implementations, the early measurement performed by the user equipment 101 may be to measure a reference signal (RS) sent by the network device 102 on at least one carrier. The at least one carrier may be configured by the network device 102.

For example, taking the reference signal as the synchronization signal block (SSB), the user equipment 101 can measure at least one of the received signal strength indication (RSSI), the reference signal received power (RSRP) and the reference signal received quality (RSRQ) of the SSB to obtain the measurement result.

In some possible implementations, the state of the first measurement result may indicate the validity of the first measurement result, i.e., whether it is valid, and/or the availability of the measurement result, i.e., whether it is available. It is worth noting that when determining the availability of the measurement result, the measurement result includes but is not limited to the first measurement result.

For example, the state of the first measurement result includes at least one of a first state, a second state, and a third state. The first state is used to indicate that the first measurement result is valid, the second state is used to indicate that the first measurement result is invalid and there is an available measurement result, and the third state is used to indicate that the measurement result of the early measurement is invalid.

In some possible implementations, the user equipment 101 may determine the state of the first measurement result according to a manner and/or parameter defined by a protocol. For more detailed implementations here, the description of the following embodiments may be referred to.

In some possible implementations, the user equipment 101 may determine the state of the first measurement result according to the manner and/or parameter configured by the network device 102. For more detailed implementations here, the description of the following embodiments may be referred to.

In some possible implementations, the user equipment 101 performs the early measurement within a corresponding measurement period or measurement duration. For example, the measurement interval or measurement duration is indicated by the running duration of the timer T331. The user equipment 101 performs the measurement during the running duration of the timer T331; when the timer T331 expires (the end time of the running), the user equipment 101 generally stops the measurement or has completed the measurement. It can be understood that the timing of performing the measurement depends on the implementation of the user equipment 101. For example, the user equipment 101 can also perform the measurement after the timer T331 expires according to its own needs.

In some possible implementations, the first time may be the end time of the measurement duration, such as the end time of running of the timer T331; or, the first time may be the time after the end time of the measurement duration, such as the time after the end time of the running of the timer T331.

In some possible implementations, at least one of the following is satisfied for the first time:
at or after the end time of the running duration of the second timer;
after receiving a paging message;
after sending msg1 to the network device during a random access process.

In this implementation, the second timer is, for example, timer T331, and reference may be made to the description of the following embodiments.

In this implementation, the user equipment 101 may monitor the paging message in its corresponding Paging Occasion (PO) according to the DRX configuration.

In this implementation, the signaling interaction process of the random access process may refer to the description of the following embodiments. The user equipment 101 may send msg1 after monitoring the paging message.

In some possible implementations, when the user equipment 101 performs measurement within the running duration of the timer T331, the measurement delay T1 required for the measurement satisfies:
T1=K_{carrier} * T_{detect,NR_Inter}, where K_{carrier} is the number of carriers to be measured configured by the network device 102 for the user equipment 101, and the value of T_{detect,NR_Inter} can be seen in Table 1 below.

It is worth noting that the value of N1 corresponding to the FR2 frequency band in Table 1 applies for the user equipment 101 supporting power classes (PCs) 2, 3 and 4; for the user equipment 101 supporting PC1 or PC5, N1 is 8 for all DRX cycle lengths.

**Table 1**

| DRX cycle length [s] | Scaling factor (N1) | | T_{detect,NR_Inter} [s] (Number of DRX cycles) |
|---|---|---|---|
| | FR1 | FR2 | |
| 0.32 | 1 | 8 | 11.52*N1*1.5 (36*N1*1.5) |
| 0.64 | | 5 | 17.92*N1 (28*N1) |
| 1.28 | | 4 | 32*N1 (25*N1) |
| 2.56 | | 3 | 58.88*N1 (23*N1) |

In step S202, the user equipment 101 sends a corresponding early measurement report (EMR) to the network device 102 according to the state of the first measurement result.

In some possible implementations, according to the description of the foregoing embodiments, the state of the first measurement result may represent the validity and/or availability of the measurement result. Therefore, when the state of the first measurement result is different, that is, according to different validity and/or availability of the measurement result, the EMR reported by the user equipment 101 is also different, so as to provide a more reliable measurement result.

For example, when the state of the first measurement result is the first state, the user equipment 101 may report an EMR including the first measurement result, or may perform verification measurement and report an EMR including the measurement result of the verification measurement to provide a valid measurement result. For a more detailed implementation here, the description of the following embodiments may be referred to.

In some possible implementations, when the measurement result is valid, it is helpful to establish the connection between the user equipment 101 and the network device 102 more quickly; otherwise, the connection may fail, for example, the network device 102 does not allow the connection to be established.

In the embodiments of the present disclosure, the user equipment 101 determines the state of the first measurement result of the early measurement, and then sends the corresponding EMR to the network device 102 according to whether the state of the first measurement result is reliable, so as to provide the network device 102 with relevant information of the referable measurement result, which is conducive to the rapid establishment of the connection or the reasonable operation of the network device 102.

The embodiment of the present disclosure provides a method for sending an early measurement report, which is performed by a user equipment 101. The method includes steps S201' to S202, specifically:

In step S201', the user equipment 101 determines a state of a first measurement result at a first time according to at least one of the first time and a first duration, where the first measurement result is a measurement result of an early measurement performed by the user equipment before the first time.

In some possible implementations, the first duration is used to represent the valid duration of the measurement result, that is, the measurement result is valid within a range of the first duration; and outside the range of the first duration, the measurement result will be invalid or expired.

In some possible implementations, the first duration may be defined by a protocol or configured by the network device 102.

In some possible implementations, the start time of the first duration may be the end time of the measurement duration, for example, the end time of running of the timer T331.

In some possible implementations, the user equipment 101 may obtain the measurement result valid duration according to the first duration to determine whether the first measurement result is within the measurement result valid duration. If so, the first measurement result is valid; otherwise, the first measurement result is invalid.

In some possible implementations, the user equipment 101 determines the validity (whether it is valid) of the first measurement result according to the relationship between the first time and the first duration.

For example, when the first time is within the first duration, the first measurement result is valid; when the first time is outside the first duration, the first measurement result is invalid or expired.

In some possible implementations, the user equipment 101 may further determine the state of the first measurement result according to the validity of the first measurement result. For more detailed implementations here, the description of the following embodiments may be referred to.

In some possible implementations, at least one of the following is satisfied for the first time:
at or after the end time of a running duration of the second timer;
after receiving a paging message;
after sending msg1 to the network device during the random access process.

In this implementation, the second timer is, for example, timer T331, and reference may be made to the description of the following embodiments.

In this implementation, the user equipment 101 can monitor the paging message in its corresponding Paging Occasion (PO) according to the DRX configuration.

In this implementation, the signaling interaction process of the random access process may refer to the description of the following embodiments. The user equipment 101 may send msg1 after monitoring the paging message.

In step S202, the user equipment 101 sends a corresponding early measurement report (EMR) to the network device 102 according to the state of the first measurement result.

In some possible implementations, the implementation of step S202 can refer to the description of the above-mentioned embodiments and will not be repeated here.

It is worth noting that the individual steps and partial steps involved in the embodiments of the present disclosure can be used as independent embodiments, and the execution order between the steps is only for illustration, and the order can be exchanged when there is no conflict.

In the embodiments of the present disclosure, the user equipment 101 can determine the validity of the first measurement result according to the relationship between the first time and the first duration, that is, determine whether the first measurement result is valid, so as to further determine the state of the first measurement result based on the validity.

The embodiment of the present disclosure provides a method for sending an early measurement report, which is performed by a user equipment 101. The method includes steps S201' to S202, specifically:

In step S201', the user equipment 101 determines a state of a first measurement result at a first time according to at least one of the first time and a first duration. The first measurement result is a measurement result of an early measurement performed by the user equipment before the first time.

In step S202, the user equipment 101 sends a corresponding early measurement report (EMR) to the network device 102 according to the state of the first measurement result.

The first duration is a measurement result valid duration defined by the protocol.

In some possible implementations, the first duration and the start time of the first duration, etc. may be defined by a protocol.

The implementation of the embodiments of the present disclosure can refer to the description of the aforementioned embodiments, which will not be repeated here.

For example, when the first time is within the first duration, the first measurement result is valid; when the first time is outside the first duration, the first measurement result is invalid or expired.

In some possible implementations, at least one of the following is satisfied for the first time:
at or after the end time of a running duration of a second timer;
after receiving a paging message;
after sending msg1 to the network device during a random access process.

In this implementation, the second timer is, for example, timer T331, and reference may be made to the description of the following embodiments.

In this implementation, the user equipment 101 can monitor the paging message in its corresponding Paging Occasion (PO) according to the DRX configuration.

In this implementation, the signaling interaction process of the random access process may refer to the description of the following embodiments. The user equipment 101 may send msg1 after monitoring the paging message.

It is worth noting that the individual steps and partial steps involved in the embodiments of the present disclosure can be used as independent embodiments, and the execution order between the steps is only for illustration, and the order can be exchanged when there is no conflict.

In the embodiments of the present disclosure, the measurement result valid duration is defined by way of protocol agreement, so that the user equipment 101 can determine the validity of the first measurement result according to the relationship between the measurement result valid duration and the first time, so as to further determine the state of the first measurement result according to the validity of the first measurement result.

The embodiment of the present disclosure provides a method for sending an early measurement report, which is performed by a user equipment 101. The method includes steps S201' to S202, specifically:

In step S201', the user equipment 101 determines a state of a first measurement result at a first time according to at least one of the first time and a first duration. The first measurement result is a measurement result of an early measurement performed by the user equipment before the first time.

In step S202, the user equipment 101 sends a corresponding early measurement report (EMR) to the network device 102 according to the state of the first measurement result.

The first duration is the running duration of a first timer configured by the network device 102, and the running duration of the first timer corresponds to the valid duration of the measurement result.

In some possible implementations, the network device 102 may configure relevant information of the first timer in the measurement configuration information corresponding to the EMR. For example, the measurement configuration information includes information such as the running duration and the running start time of the first timer.

In some possible implementations, during the running of the first timer, that is, within its running duration, the measurement result is valid; when the first timer times out, that is, outside its running duration, the measurement result will be invalid or expired.

In some possible implementations, by determining whether the first timer is running at the first time, the relationship between the first time and the first duration can be known, and further the validity of the first measurement result can be known.

For example, if the first timer is running at the first time, it indicates that the first time is within the range of the first duration and the first measurement result is valid; if the first timer has timed out at the first time, it indicates that the first time is outside the range of the first duration and the first measurement result is invalid or expired.

In some possible implementations, at least one of the following is satisfied for the first time:
at or after the end time of the running duration of the second timer;
after receiving the paging message;
after sending msg1 to the network device during the random access process.

In this implementation manner, the second timer is, for example, timer T331, and reference may be made to the description of the following embodiments.

In this implementation, the user equipment 101 can monitor the paging message in its corresponding Paging Occasion (PO) according to the DRX configuration.

In this implementation, the signaling interaction process of the random access process may refer to the description of the following embodiments. The user equipment 101 may send msg1 after monitoring the paging message.

It is worth noting that the individual steps and partial steps involved in the embodiments of the present disclosure can be used as independent embodiments, and the execution order between the steps is only for illustration, and the order can be exchanged when there is no conflict.

In the embodiments of the present disclosure, the first timer is configured by the network device 102 to monitor the measurement result valid duration through the running of the first timer. Thus, the user equipment 101 can learn the relationship between the first time and the first duration by whether the first timer is running at the first time, and then learn the validity of the first measurement result, so that the state of the first measurement result can be further determined according to the validity of the first measurement result.

The embodiment of the present disclosure provides a method for sending an early measurement report, which is performed by a user equipment 101. The method includes steps S201' to S202, specifically:

In step S201', the user equipment 101 determines a state of a first measurement result at a first time according to at least one of the first time and a first duration. The first measurement result is a measurement result of an early measurement performed by the user equipment before the first time.

In step S202, the user equipment 101 sends a corresponding early measurement report (EMR) to the network device 102 according to the state of the first measurement result.

The start time of the first duration is the end time of running of the second timer, and the running duration of the second timer corresponds to the measurement duration of the early measurement; or,
the start time of the first duration is the time when the measurement result of the last early measurement is obtained.

In some possible implementations, the second timer may be timer T331. According to the description of the foregoing embodiments, the user equipment 101 performs early measurement during the running duration of timer T331; when timer T331 times out (end time of running), the user equipment 101 generally stops measuring or has completed measuring. In this scenario, the start time of the first duration is the end time of the running of timer T331, that is, the start time of the valid duration of the first measurement result is the end time of the running of the timer T331.

In some possible implementations, for some user equipment 101, it may perform early measurement after timer T331 times out to obtain a first measurement result. In this scenario, the valid duration of the first measurement result, i.e., the start time of the first duration, is the time when the measurement result of the last early measurement is obtained. It is worth noting that the first measurement result can always use the measurement result of the latest early measurement. It is understandable that this last early measurement may be a measurement on the carrier specified by any network device 102.

For example, the user equipment 101 performs N early measurements after the timer T331 times out, and the start time of the first duration may be: the time when the N-th early measurement is completed, that is, the time when the measurement result of the N-th measurement is obtained. The measurement result corresponding to the N-th measurement is the first measurement result.

In some possible implementations, according to the description of the foregoing embodiments, the first duration may be either the measurement result valid duration defined by the protocol or the valid duration of the measurement result monitored by the running duration of the first timer configured by the network device 102.

In some possible implementations, at least one of the following is satisfied for the first time:
at or after the end time of the running duration of the second timer;
after receiving the paging message;
after sending msg1 to the network device during the random access process.

In this implementation, the second timer is, for example, timer T331.

In this implementation, the user equipment 101 can monitor the paging message in its corresponding Paging Occasion (PO) according to the DRX configuration.

In this implementation manner, the signaling interaction process of the random access process may refer to the description of the following embodiments. The user equipment 101 may send msg1 after monitoring the paging message.

To facilitate understanding of the embodiments of the present disclosure, an example is listed below.

This example describes the relationship among the running duration of the second timer, the first time, and the first duration based on the schematic diagram of the time axis in FIG. 3.

As shown in FIG. 3, within the running duration t0 to t1 of the second timer (e.g., timer T331), the user equipment 101 performs measurement to obtain a first measurement result.

At the end time t1 of running of the second timer, the range of the first duration is entered, that is, t1 is the start time of the measurement result valid duration. Alternatively, in an implementation in which the first timer monitors the first duration, the first timer starts running from t1. According to the running duration of the first timer or the measurement result valid duration, the first duration ranges from t1 to t2.

The first time is recorded as t3, and time t3 is at or after time t1. At the first time, the user equipment 101 determines the validity of the first measurement result.

If the first time is within the range of the first duration t1-t2, the first measurement result is valid; if the first time is outside the range of the first duration t1-t2, such as after t2, the first measurement result is expired or invalid.

In the embodiments of the present disclosure, the start time of the first duration is illustrated. Based on the start time of the first duration, the relationship between the first time and the first duration can be determined to facilitate determining the validity of the first measurement result at the first time.

The embodiment of the present disclosure provides a method for sending an early measurement report, which is performed by a user equipment 101. The method includes steps S201' to S202, specifically:

In step S201', the user equipment 101 determines a state of a first measurement result at a first time according to at least one of the first time and a first duration. The first measurement result is a measurement result of an early measurement performed by the user equipment before the first time.

In some possible implementations, the implementation of the first time can refer to the description of the aforementioned embodiments and will not be repeated here.

In step S202, the user equipment 101 sends a corresponding early measurement report (EMR) to the network device 102 according to the state of the first measurement result.

In some possible implementations, in the process in which the user equipment 101 determines the state of the first measurement result at the first time according to at least one of the first time and the first duration, reference may be made to the description of at least one of the following examples.

In one example, if the first time is within the range of the first duration, the user equipment 101 determines that the state of the first measurement result is a first state, and the first state is used to indicate that the first measurement result is valid.

In this example, referring to the description of the foregoing embodiments and FIG. 3, the first duration may be a measurement result valid duration defined by the protocol, or may be represented by the running duration of a first timer configured by the network device 102.

In this example, when the first measurement result is valid, the user equipment 101 may not determine the availability of the measurement result.

In one example, if the first time is outside the range of the first duration and there is an available measurement result, the user equipment 101 determines that the state of the first measurement result is a second state, and the second state is used to indicate that the first measurement result is invalid and there is an available measurement result.

In this example, when the first measurement result is invalid, the user equipment 101 may determine the availability of the measurement result.

In this example, whether the measurement result is available depends on the implementation of the user equipment 101. For example, if the memory of the user equipment 101 stores an EMR-related measurement result, it is considered that there is the available measurement result, that is, the stored measurement result is available.

In this example, when the user equipment 101 stores an available measurement result, the measurement result may be the first measurement result, but is not limited to the first measurement result, and may also be other measurement results, such as a measurement result obtained before the measurement corresponding to the first measurement result.

In one example, if the first time is outside the range of the first duration and there is no available measurement result in the user equipment 101, the user equipment 101 determines that the state of the first measurement result is a third state, and the third state is used to indicate that the measurement result of the early measurement is invalid.

In this example, if there is no measurement result stored in the user equipment 101, it indicates that the user equipment 101 currently has no available measurement result.

In this example, when the first measurement result is expired or invalid, and there is no available measurement result in the user equipment 101, the third state is used to correspondingly indicate the state of invalid measurement result. The state of invalid measurement result may not only indicate that the first measurement result is invalid, but also include the meaning that other measurement results are invalid.

In one example, if the first time is within the range of the first duration, the user equipment 101 determines that the state of the first measurement result is the first state, and the first state is used to indicate that the first measurement result is valid.

If the first time is outside the range of the first duration and there is an available measurement result, the user equipment 101 determines that the state of the first measurement result is the second state, where the second state is used to indicate that the first measurement result is invalid and there is an available measurement result.

The implementation of this example can refer to the description of the above examples, which will not be repeated here.

In one example, if the first time is within the range of the first duration, the user equipment 101 determines that the state of the first measurement result is the first state, and the first state is used to indicate that the first measurement result is valid.

If the first time is outside the range of the first duration and there is no available measurement result in the user equipment 101, the user equipment 101 determines that the state of the first measurement result is the third state, and the third state is used to indicate that the measurement result of the early measurement is invalid.

The implementation of this example can refer to the description of the above examples, which will not be repeated here.

In one example, if the first time is outside the range of the first duration and there is an available measurement result, the user equipment 101 determines that the state of the first measurement result is the second state, and the second state is used to indicate that the first measurement result is invalid and there is an available measurement result.

If the first time is outside the range of the first duration and there is no available measurement result in the user equipment 101, the user equipment 101 determines that the state of the first measurement result is the third state, and the third state is used to indicate that the measurement result of the early measurement is invalid.

The implementation of this example can refer to the description of the above examples, which will not be repeated here.

In one example, if the first time is within the range of the first duration, the user equipment 101 determines that the state of the first measurement result is the first state, and the first state is used to indicate that the first measurement result is valid.

If the first time is outside the range of the first duration and there is an available measurement result, the user equipment 101 determines that the state of the first measurement result is the second state, and the second state is used to indicate that the first measurement result is invalid and there is an available measurement result.

If the first time is outside the range of the first duration and there is no available measurement result in the user equipment 101, the user equipment 101 determines that the state of the first measurement result is the third state, and the third state is used to indicate that the measurement result of the early measurement is invalid.

The implementation of this example can refer to the description of the above examples, which will not be repeated here.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, the user equipment 101 comprehensively determines the state of the first measurement result according to at least one of the validity of the first measurement result and the availability of the measurement result, so that different states of the first measurement result can be classified, which is conducive to determining the corresponding EMR according to different states.

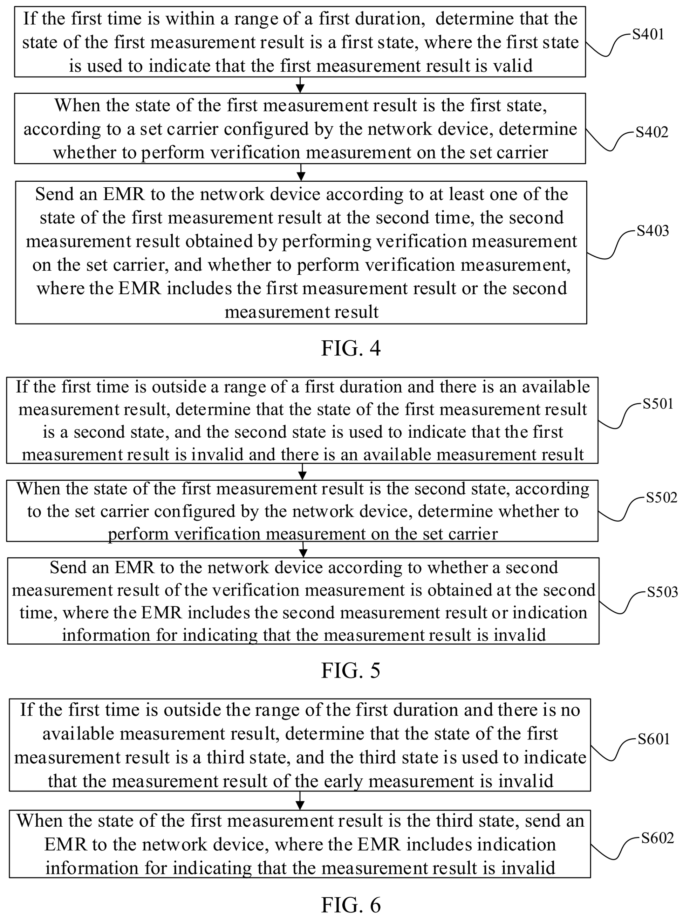

The embodiment of the present disclosure provides a method for sending an early measurement report, which is performed by a user equipment 101. Referring to FIG. 4, FIG. 4 is a method for sending an early measurement report according to an exemplary embodiment, which is performed by a user equipment 101. As shown in FIG. 4, the method includes steps S401 to S403, specifically:
In step S401, if the first time is within a range of a first duration, the user equipment 101 determines that the state of the first measurement result is a first state, where the first state is used to indicate that the first measurement result is valid.

The first measurement result is a measurement result of an early measurement performed by the user equipment in an idle state or an inactive state before the first time.

In some possible implementations, the implementations related to the first state can also refer to the description of the aforementioned embodiments, which will not be repeated here. For example, when the first time is within the measurement result valid duration, or within the running duration of the first timer, the first measurement result is valid; at this time, the state of the first measurement result is the first state.

In some possible implementations, the implementations of the first time can refer to the description of the aforementioned embodiments and will not be repeated here.

It can be understood that regarding the determination of the first state, or the implementations in the first state, reference can also be made to the description involved in the aforementioned embodiments, and similar descriptions are not fully repeated here.

In step S402, when the state of the first measurement result is the first state, according to a set carrier configured by the network device 102, the user equipment 101 determines whether to perform verification measurement on the set carrier.

In some possible implementations, the network device 102 may configure the set carrier in the measurement configuration information.

In some possible implementations, after receiving the measurement configuration information, the user equipment 101 may generally perform verification measurement on the set carrier. However, there are some scenarios where the user equipment 101 does not perform verification measurement, such as insufficient energy consumption of the user equipment 101 or other reasons about implementation of the user equipment 101.

In some possible implementations, the set carrier may also be determined according to a rule defined by a protocol.

In some possible implementations, when performing the verification measurement, the user equipment 101 may still measure the RSSI, RSRP or RSRQ of the SSB.

In some possible implementations, the measurement result obtained during the verification measurement process may be recorded as the second measurement result. If the verification measurement does not obtain a measurement result, such as measurement failure or invalidity, the measurement result may not be obtained.

It can be understood that regarding the determination of the first state, or the implementations in the first state, reference can also be made to the description involved in the aforementioned embodiments, and similar descriptions are not fully repeated here.

In step S403, the user equipment 101 sends an EMR to the network device 102 according to at least one of the state of the first measurement result at the second time, the second measurement result obtained by performing verification measurement on the set carrier, and whether to perform verification measurement, where the EMR includes the first measurement result or the second measurement result.

In some possible implementations, the second time may be after the first time, that is, the state of the first measurement result is determined again at the second time. For example, it is determined whether the first measurement result is still valid at the second time.

In some possible implementations, the second time is after the user equipment 101 receives msg4 sent by the network device 102 during the random access process.

In this implementation, in order to clearly describe the second time, taking a 4-step random access process as an example, the signaling interaction sequence of the random access process is briefly described below.

The user equipment 101 sends msg1 to the network device 102 to send a random access preamble (Preamble).

After receiving msg1, the network device 102 sends msg2 to the user equipment 101 to send a Random Access Response (RAR).

After receiving msg2, the user equipment 101 sends msg3 to the network device 102 to send an RRC setup request.

After receiving msg3, the network device 102 sends msg4 to the user equipment 101 to send an RRC setup command.

After receiving msg4, the user equipment 101 may also send msg5 to the network device 102 to report an RRC connection setup complete message (RRCConnectionSetupComplete). It is understandable that msg1 to msg4 are generally considered to be the random access process, and msg5 is not included in the random access range.

Referring to the random access process, the second time is, for example, between the time when the user equipment 101 receives msg4 and the time when it sends msg5.

In some possible implementations, at the second time, such as after receiving msg4, if the first measurement result is still in the first state (i.e., valid), and the user equipment 101 has obtained the second measurement result of the verification measurement, the user equipment 101 reports an EMR to the network device 102, and the EMR includes the second measurement result.

In some possible implementations, at the second time, such as after receiving msg4, if the first measurement result is still in the first state (i.e., valid), and the user equipment 101 has not obtained the measurement result of the verification measurement or has not performed the verification measurement, the user equipment 101 reports an EMR to the network device 102, and the EMR includes the first measurement result.

In some possible implementations, the user equipment 101 may carry the EMR in msg5.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, when the state of the first measurement result is the first state, that is, when the first measurement result is valid, the user equipment 101 may perform one verification measurement. After obtaining the second measurement result of the verification measurement, the newly obtained second measurement result may be reported to the network device 102. If the second measurement result is not successfully obtained, the still valid first measurement result may be sent to the network device 102. Based on this embodiment, the network device 102 obtains a reliable EMR, which can effectively improve the efficiency and success rate of establishing a connection.

The embodiment of the present disclosure provides a method for sending an early measurement report, which is performed by the user equipment 101. Referring to FIG. 5, FIG. 5 is a method for sending an early measurement report according to an exemplary embodiment, which is performed by the user equipment 101. As shown in FIG. 5, the method includes steps S501 to S503, specifically:
In step S501, if the first time is outside a range of a first duration and there is an available measurement result, the user equipment 101 determines that the state of the first measurement result is a second state, and the second state is used to indicate that the first measurement result is invalid and there is an available measurement result.

The first measurement result is a measurement result of an early measurement performed by the user equipment before the first time.

In some possible implementations, implementations related to the second state may also refer to the description of the aforementioned embodiments, which will not be repeated here. For example, when the first time is outside the measurement result valid duration, or the first timer has timed out at the first time, and the user equipment 101 stores the measurement result, the state of the first measurement result is the second state.

In some possible implementations, the implementation of the first time can refer to the description of the aforementioned embodiments and will not be repeated here.

It can be understood that regarding the determination of the second state, or the implementations in the second state, reference can also be made to the description involved in the aforementioned embodiments, and similar descriptions are not fully repeated here.

In step S502, when the state of the first measurement result is the second state, according to the set carrier configured by the network device 102, the user equipment 101 determines whether to perform verification measurement on the set carrier.

In some possible implementations, after receiving the measurement configuration information, the user equipment 101 may generally perform verification measurement on the set carrier. However, there are some scenarios where the user equipment 101 does not perform verification measurement, such as insufficient energy consumption of the user equipment 101 or other reasons about implementation of the user equipment 101.

In some possible implementations, the set carrier may also be determined according to a rule defined by a protocol.

In some possible implementations, the set carrier may be configured by the network device 102 in the measurement configuration information.

In some possible implementations, when performing the verification measurement, the user equipment 101 may still measure the RSSI, RSRP or RSRQ of the SSB.

In some possible implementations, the measurement result obtained during the verification measurement process may be recorded as the second measurement result. If the verification measurement does not obtain a measurement result, such as measurement failure or invalidity, the measurement result may not be obtained.

It can be understood that regarding the determination of the second state, or the implementations in the second state, reference can also be made to the description involved in the aforementioned embodiments, and similar descriptions are not fully repeated here.

In step S503, the user equipment 101 sends an EMR to the network device 102 according to whether a second measurement result of the verification measurement is obtained at the second time, where the EMR includes the second measurement result or indication information for indicating that the measurement result is invalid.

In some possible implementations, the second time may be after the first time, that is, the state of the first measurement result is determined again at the second time. For example, it is determined whether the first measurement result is still valid at the second time.

In some possible implementations, the second time is after the user equipment 101 receives msg4 sent by the network device 102 during the random access process.

According to the description of the foregoing embodiments, the second time is, for example, between the time when the user equipment 101 receives msg4 and the time when it sends msg5.

In some possible implementations, at the second time, such as after receiving msg4, if the state of the first measurement result is the second state (invalid but the available measurement result exists), and the user equipment 101 has obtained the second measurement result of the verification measurement, the user equipment 101 reports an EMR to the network device 102, and the EMR includes the second measurement result.

In some possible implementations, at the second time, such as after receiving msg4, if the state of the first measurement result is the second state (invalid but the available measurement result exists), and the user equipment 101 does not obtain the second measurement result, the user equipment 101 reports an EMR to the network device 102, and the EMR includes indication information for indicating that the measurement result is invalid.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, when the state of the first measurement result is the second state, that is, when the first measurement result is invalid but there is an available measurement result in the user equipment 101, the user equipment 101 can perform one verification measurement. After obtaining the second measurement result of the verification measurement, the newly obtained second measurement result can be reported to the network device 102. If the second measurement result is not successfully obtained, indication information can be sent to the network device 102 to report to the network device 102 that the measurement result is invalid. Based on this embodiment, the network device 102 can quickly establish a connection with reference to the EMR, or promptly learn that the measurement result is invalid.

The embodiment of the present disclosure provides a method for sending an early measurement report, which is performed by a user equipment 101. Referring to FIG. 6, FIG. 6 is a method for sending an early measurement report according to an exemplary embodiment, which is performed by the user equipment 101. As shown in FIG. 6, the method includes steps S601 to S602, specifically:
In step S601, if the first time is outside the range of the first duration and there is no available measurement result, the user equipment 101 determines that the state of the first measurement result is a third state, and the third state is used to indicate that the measurement result of the early measurement is invalid.

The first measurement result is a measurement result of an early measurement performed by the user equipment before the first time.

In some possible implementations, the implementations related to the third state can also refer to the description of the aforementioned embodiments, which will not be repeated here. For example, when the first time is outside the measurement result valid duration, or the first timer has timed out at the first time, that is, the first measurement result is invalid; and there is no available measurement result in the user equipment 101; at this time, the state of the first measurement result is the third state.

In some possible implementations, the implementation of the first time can refer to the description of the aforementioned embodiments and will not be repeated here.

In step S602, when the state of the first measurement result is the third state, the user equipment 101 sends an EMR to the network device 102, where the EMR includes indication information for indicating that the measurement result is invalid.

It can be understood that regarding the determination of the third state, or the implementations in the third state, reference can also be made to the description involved in the aforementioned embodiments, and similar descriptions are not fully repeated here.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, when the state of the first measurement result is the third state, that is, the first measurement result is invalid and there is no available measurement result in the user equipment 101, the user equipment 101 does not need to perform verification measurement again, and can directly report the indication information that the measurement result is invalid. Thus, the network device 102 can timely learn the reliability of the EMR, which is convenient for performing other operations, such as re-indicating early measurement, or terminating the connection.

The embodiment of the present disclosure provides a method for sending an early measurement report, which is performed by a user equipment 101. The method includes steps S201 to S202', specifically:
In step S201, the user equipment 101 determines a state of a first measurement result at a first time, where the first measurement result is a measurement result of an early measurement performed by the user equipment before the first time.

In step S202', the user equipment 101 sends msg5 to the network device according to the state of the first measurement result after receiving msg4 of the random access process, where msg5 includes EMR.

In some possible implementations, according to the description of the random access process in the foregoing embodiments, the user equipment 101 may send the EMR in msg5.

It is worth noting that the implementations of sending EMR in msg5 are applicable to any of the aforementioned embodiments. For example, if the state of the first measurement result is the first state, the second state or the third state, the user equipment 101 can send the EMR corresponding to the state in msg5.

Regarding the determination of at least one of the first state, the second state and the third state, or the implementation of at least one of the three states, reference may also be made to the description involved in the aforementioned embodiments, and similar descriptions are not fully repeated here.

The embodiments of the present disclosure may be executed independently of the aforementioned embodiments, or may be selectively executed in combination with at least one of the aforementioned embodiments.

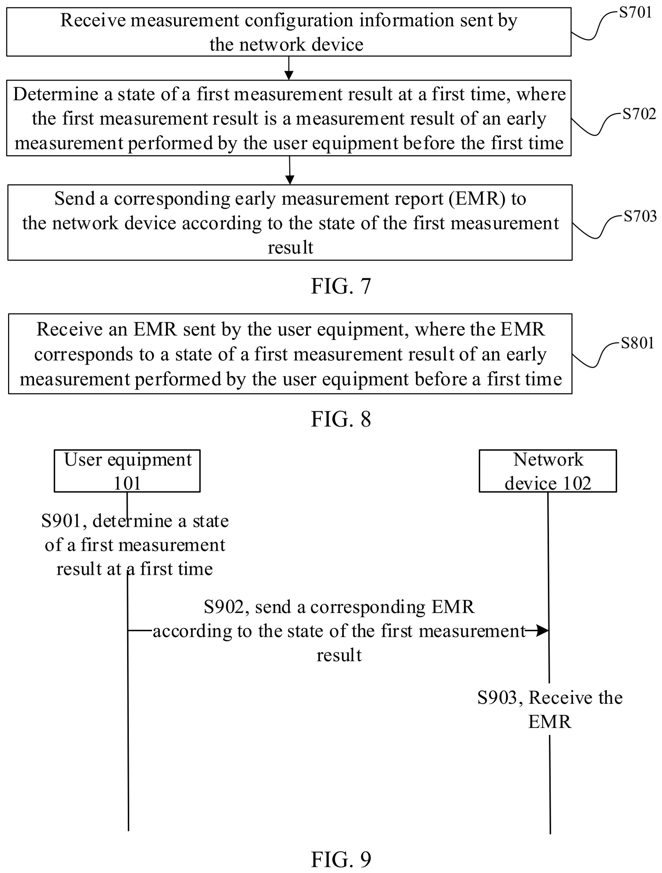

The embodiment of the present disclosure provides a method for sending an early measurement report, which is performed by a user equipment 101. Referring to FIG. 7, FIG. 7 is a method for sending an early measurement report according to an exemplary embodiment, which is performed by the user equipment 101. As shown in FIG. 7, the method includes steps S701 to S703, specifically:
In step S701, the user equipment 101 receives measurement configuration information sent by the network device 102.

The measurement configuration information includes at least one of the following:
at least one carrier corresponding to the early measurement;
a running duration of the first timer;
a running duration of the second timer;
a set carrier corresponding to the verification measurement;
a priority level corresponding to at least one carrier.

In some possible implementations, the network device 102 sends the measurement configuration information via IE *MeasIdleConfig* signaling.

In some possible implementations, an index corresponding to at least one carrier or other identifier may be indicated in the measurement configuration information.

In some possible implementations, relevant running information of the first timer and the second timer may be configured in the measurement configuration information, which is not limited to the running duration, and may also include the running start time.

In some possible implementations, the measurement configuration information may indicate an index or identifier corresponding to the set carrier.

In some possible implementations, the set carrier is one of the following:
one or more of at least one carrier;
one or more carriers with a priority level higher than or equal to the set level in the at least one carrier.

In this implementation, the measurement configuration information may also indicate a setting level P. Thus, after receiving the measurement configuration information, the user equipment 101 may determine, among at least one carrier, a carrier with a priority level higher than or equal to level P as the set carrier. The user equipment 101 performs measurement on each set carrier.

In step S702, the user equipment 101 determines a state of a first measurement result at a first time, where the first measurement result is a measurement result of an early measurement performed by the user equipment before the first time.

In step S703, the user equipment 101 sends a corresponding early measurement report (EMR) to the network device 102 according to the state of the first measurement result.

The implementations of determining the state of the first measurement result in step S702 and the implementations of sending the corresponding EMR according to the state in step S703 can refer to the description of the above embodiments, which will not be repeated here.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, the user equipment 101 receives the measurement configuration information sent by the network device 102 to obtain the relevant configuration of the early measurement or verification measurement, such as the carrier configuration and/or the timer configuration, so as to perform the measurement according to the measurement configuration information and determine the state according to the measurement configuration information.

The embodiment of the present disclosure provides a method for receiving an early measurement report, which is performed by the network device 102. Referring to FIG. 8, FIG. 8 is a method for receiving an early measurement report according to an exemplary embodiment, which is performed by the network device 102. As shown in FIG. 8, the method includes step S801, specifically:
In step S801, the network device 102 receives an EMR sent by the user equipment 101, where the EMR corresponds to a state of a first measurement result of an early measurement performed by the user equipment 101 before a first time.

In some possible implementations, the user equipment 101 sending the EMR may be a user equipment 101 in an idle state or an inactive state.

In some possible implementations, the state of the first measurement result may indicate the validity of the first measurement result, i.e., whether it is valid, and/or the availability of the measurement result, i.e., whether it is available. When determining the availability of the measurement result, the measurement result includes but is not limited to the first measurement result, and may also include other measurement results.

For example, the state of the first measurement result includes a first state, a second state, and a third state, where the first state is used to indicate that the first measurement result is valid, the second state is used to indicate that the first measurement result is invalid and there is an available measurement result in the user equipment, and the third state is used to indicate that the measurement result of the early measurement is invalid.

In some possible implementations, at least one of the following is satisfied for the first time:
at or after the end time of the running duration of the second timer;
after receiving the paging message;
after sending msg1 to the network device during the random access process.

In this implementation, the second timer is, for example, timer T331, and reference may be made to the description of the following embodiments.

In this implementation, the user equipment 101 can monitor the paging message in its corresponding Paging Occasion (PO) according to the DRX configuration.

In this implementation, the signaling interaction process of the random access process may refer to the description of the following embodiments. The user equipment 101 may send msg1 after monitoring the paging message.

It can be understood that the relevant implementations of the embodiments of the present disclosure can all refer to the implementations of the method on the user equipment 101 side, and the descriptions of the relevant embodiments are not fully cited or repeated here.

In the embodiments of the present disclosure, the network device 102 may receive the EMR sent by the user equipment 101 to learn whether the state of the first measurement result is reliable, which is beneficial for rapid establishment of a connection or reasonable operation of the network device 102.

The embodiment of the present disclosure provides a method for receiving an early measurement report, which is performed by the network device 102. The method includes steps S800 to S801, specifically:
In step S800, the network device 102 sends measurement configuration information to the user equipment, where the measurement configuration information includes at least one of the following:
at least one carrier corresponding to the early measurement;
the running duration of the first timer;
the running duration of the second timer;
the set carrier corresponding to the verification measurement;
a priority level corresponding to at least one carrier;
where the running duration of the first timer corresponds to the valid duration of the measurement result, and the running duration of the second timer corresponds to the measurement duration of the early measurement.

In some possible implementations, the network device 102 sends measurement configuration information via IE *MeasIdleConfig* signaling.

In some possible implementations, the set carrier is one of the following:
one or more of at least one carrier;
one or more carriers in the at least one carrier having a priority higher than or equal to a set level.

In step S801, the network device 102 receives an EMR sent by the user equipment 101, where the EMR corresponds to a state of a first measurement result of an early measurement performed by the user equipment 101 before a first time.

It is understandable that the relevant implementations of the embodiments of the present disclosure can all refer to the implementations of the method on the user equipment 101 side, and the descriptions of the relevant embodiments are not all quoted or repeated here. The embodiments of the present disclosure can be performed independently of the aforementioned embodiments, or can be selectively performed in combination with at least one of the aforementioned embodiments.

In the embodiments of the present disclosure, the network device 102 sends measurement configuration information to the user equipment 101 to indicate to the user equipment 101 relevant configuration of early measurement or verification measurement, such as carrier configuration and/or timer configuration, so that the user equipment 101 can perform measurement according to the measurement configuration information and determine state according to the measurement configuration information.

The embodiment of the present disclosure provides a method for receiving an early measurement report, which is performed by the network device 102. The method includes step S801, specifically:
In step S801, the network device 102 receives an EMR sent by the user equipment 101, where the EMR corresponds to a state of a first measurement result of an early measurement performed by the user equipment 101 before a first time.

The EMR includes one of the following:
a first measurement result;
a second measurement result;
indication information used to indicate that a measurement result is invalid;
where the second measurement result is a measurement result corresponding to the verification measurement performed by the user equipment on the set carrier.

In the embodiments of the present disclosure, referring to the description of the aforementioned embodiments, the state of the first measurement result includes at least one of the first state, the second state and the third state. Based on the different states, the EMR sent by the user equipment 101 may include different contents. For a more detailed implementation here, the description of the aforementioned embodiments may be referred to, which will not be repeated here.

In some possible implementations, when the network device 102 receives the first measurement result and the second measurement result, it receives a valid and reliable EMR, so the network device 102 can quickly establish a connection with the user equipment 101, thereby improving the efficiency and success rate of the connection.

In some possible implementations, when the network device 102 receives indication information indicating that the measurement result is invalid, it indicates that the EMR is unreliable, so the network device 102 can perform relevant operations in a timely manner, such as terminating the connection, or re-instructing the user equipment 101 to perform measurement.

The embodiments of the present disclosure may be executed independently of the aforementioned embodiments, or may be selectively executed in combination with at least one of the aforementioned embodiments.

The embodiment of the present disclosure provides a method for receiving an early measurement report, which is performed by the network device 102. The method includes step S801', specifically:

In step S801', the network device 102 receives msg5 sent by a user equipment in an idle state or an inactive state, where msg5 includes EMR. The EMR corresponds to the state of a first measurement result of an early measurement performed by the user equipment 101 before a first time.

It can be understood that the signaling interaction process of the random access process and related implementations can refer to the description of the aforementioned embodiments and will not be repeated here.

The embodiments of the present disclosure may be executed independently of the aforementioned embodiments, or may be selectively executed in combination with at least one of the aforementioned embodiments.

In the embodiment of the present disclosure, the network device 102 receives msg5 sent by the user equipment 101 to obtain the EMR in the state corresponding to the first measurement result, so that reasonable operations can be performed according to the EMR.

The embodiment of the present disclosure provides a method for transmitting an early measurement report. Referring to FIG. 9, FIG. 9 is a method for transmitting an early measurement report according to an exemplary embodiment. As shown in FIG. 9, the method includes steps S901 to S903, specifically:
In step S901, the user equipment 101 determines a state of a first measurement result at a first time, where the first measurement result is a measurement result of an early measurement performed by the user equipment before the first time.
In step S902, the user equipment 101 sends a corresponding early measurement report (EMR) to the network device 102 according to the state of the first measurement result.
In step S903, the network device 102 receives the EMR sent by the user equipment 101.

The implementations in the embodiments of the present disclosure can refer to the aforementioned implementations of the user equipment 101 executing the method, or the implementations of the network device 102 executing the method, which will not be repeated here.

It is worth noting that the individual steps and partial steps involved in the embodiments of the present disclosure can be used as independent embodiments, and the execution order between the steps is only for illustration, and the order can be exchanged when there is no conflict. In addition, the embodiments of the present disclosure can be executed independently of the aforementioned embodiments, or can be selectively executed in combination with at least one of the aforementioned embodiments.

In the embodiments of the present disclosure, the user equipment 101 can dynamically determine the state of the first measurement result, thereby reporting the EMR corresponding to the state, providing the network device 102 with reliable measurement results or reference information, which is conducive to the rapid establishment of the connection or the reasonable operation of the network device 102.

To facilitate understanding of the embodiments of the present disclosure, some specific examples are listed below.

### First Example:

The UE may confirm the state (available and/or valid) of the EMR measurement result at a certain time point after the EMR measurement duration expires, and the UE confirms whether to start verification measurement of the EMR measurement result and EMR measurement result report information on the designated carrier according to the state information of the EMR measurement result.

For example, the user equipment 101 confirms the state of the first measurement result of the early measurement at a time point (recorded as the first time) after the second timer (such as timer T331) expires.

The user equipment 101 determines whether to perform verification measurement on the set carrier according to the state of the first measurement result. Referring to the description of the above embodiments, in the first state and the second state, the user equipment 101 performs verification measurement; in the third state, the user equipment 101 does not need to perform verification measurement.

The user equipment 101 reports the corresponding EMR according to the state of the first measurement result and the situation of the verification measurement.

### Second Example:

The network device can configure the validity condition of the EMR measurement results through IE *MeasIdleConfig,* or agree upon the validity condition of the EMR measurement results by the protocol. The UE can perform EMR measurements in the idle/inactive state according to the information configured in IE *MeasIdleConfig.*

For example, the network device 102 configures the validity condition of the measurement results through the IE *MeasIdleConfig* signaling, such as configuring the running duration and running start time of the first timer.

Alternatively, the validity condition of the measurement result is defined by way of protocol agreement. For example, the protocol defines the measurement result valid duration, which can be recorded as the first duration.

Optionally, when the user equipment 101 is in an idle state or an inactive state, it performs EMR-related measurements, such as early measurements and verification measurements, according to the measurement configuration information carried by the IE *MeasIdleConfig* signaling.

The running start time of the first timer, or the start time of the measurement result valid duration defined by the protocol, may be the end time of running of the second timer (such as timer T331).

### Third Example:

When timer T331 expires, after the UE receives a paging message or sends Msg 1, the behaviors of the UE can have the following scenarios.

### First Scenario:

If the measurement result valid timer configured by the network device has not expired or is still within the time agreed upon by the protocol, that is, when the EMR measurement result is determined to be valid, the UE may perform verification measurement of the EMR measurement result on the designated carrier.

If the EMR measurement result is still valid after the UE receives Msg 4, and if the UE performs the verification measurement and obtains the measurement result of the verification measurement, the UE may report the EMR measurement result after the verification measurement.

If the EMR measurement result is still valid after the UE receives the Msg 4 message, and if the UE has not performed the verification measurement or has performed it but has not obtained the measurement result of the verification measurement, the UE may report the valid EMR measurement result.

The start moment of the valid time of the timer or agreed upon by the protocol is the moment when the EMR measurement timer T331 expires.

### Second Scenario:

If the measurement result valid timer configured by the network device has expired or the time agreed upon in the protocol has passed, that is, when it is determined that the EMR measurement result is invalid, but the EMR measurement result is available, the UE may perform verification measurement of the EMR measurement result on the specified carrier.

If the UE can obtain the measurement result of the verification measurement after receiving the Msg 4 message, the UE reports the EMR measurement result after the verification measurement in Msg 5, otherwise, the UE can report the indication information of invalid EMR measurement result.

The start moment of the valid time of the timer or agreed upon by the protocol is the moment when the EMR measurement timer T331 expires.

### Third Scenario:

If the measurement result valid timer configured by the network device has expired or the time agreed upon in the protocol has passed, that is, when the EMR measurement result is determined to be invalid and the EMR measurement result is unavailable, the UE may report indication information of invalid EMR measurement result.

The start moment of the valid time of the timer or agreed by a protocol is the moment when the EMR measurement timer T331 expires. For example, when the second timer (such as timer T331) expires or times out, after the user equipment 101 receives a paging message or sends msg1, according to the state of the first measurement result, the behavior of the user equipment 101 has the following three situations.

The first situation (first state):
At the first time, if the first timer has not expired or is still within the measurement result valid duration defined by the protocol, the user equipment 101 may determine that the first measurement result is valid. At this time, the user equipment 101 may perform verification measurement on the set carrier.

If the first measurement result is still valid after the user equipment 101 receives msg4 (at the second time), and the user equipment 101 has obtained the second measurement result of the verification measurement, the user equipment 101 may report the second measurement result.

If the first measurement result is still valid after the user equipment 101 receives msg4 (at the second time), and the user equipment 101 does not perform the verification measurement or fails to successfully obtain the measurement result of the verification measurement, the user equipment 101 may report the first measurement result.

The second situation (second state):
At the first time, if the first timer has expired or the measurement result valid duration defined by the protocol has passed, the user equipment 101 may determine that the first measurement result is invalid; but if there is an available measurement result in the user equipment 101, the user equipment 101 can still perform the verification measurement on the set carrier.

If the user equipment 101 obtains the second measurement result of the verification measurement after receiving msg4 (at the second time), the user equipment 101 may send the second measurement result in msg5. Otherwise, the user equipment 101 may report indication information in msg5 to indicate that the measurement result is invalid.

The third situation (third state):
At the first time, if the first timer has expired or the measurement result valid duration defined by the protocol has passed, the user equipment 101 may determine that the first measurement result is invalid; and if there is no available measurement result in the user equipment 101, the user equipment 101 reports indication information to indicate that the measurement result is invalid.

### Fourth Example:

The time point at which the UE confirms the validity of the EMR measurement result may be:
after UE receives the paging message;
after UE sends Msg 1 message.

For example, the time point (i.e., the first time) at which the user equipment 101 determines the first measurement result state may be one of the following:
after the user equipment 101 receives the paging message;
after user equipment 101 sends Msg 1 message.

### Fifth Example:

The time point when the UE confirms the EMR measurement result report is: after UE receives Msg 4 message.

For example, the time point at which the user equipment 101 reports the EMR may be that:
after receiving the msg 4 message, the user equipment 101 sends an EMR, for example, when sending msg5.

### Sixth Example:

Whether the EMR measurement result is available (availability) depends on the implementation of the UE. For example, if there is an EMR measurement result stored in the memory of the UE, the EMR measurement result is considered to be available.

Optionally, the availability of the measurement result depends on the implementation of the user equipment 101. For example, if there is an EMR measurement result stored in the memory of the user equipment 101, the EMR measurement result is considered to be available. The stored measurement result includes but is not limited to the first measurement result.

### Seventh Example:

The validity of the EMR measurement results can be judged in the following manners.
First manner: the network device configures the EMR measurement result validity timer through IE *MeasIdleConfig;*
Second manner: the EMR measurement result valid duration is defined through protocol agreement.

For example, the validity of the measurement result can be judged in the following manners.

First manner: the network device 102 configures the EMR measurement result validity timer, such as the first timer, through IE *MeasIdleConfig.* During the operation of the first timer, the measurement result is valid. When the first timer times out or expires, the measurement result is invalid.

Second manner: the EMR measurement result valid duration is defined through protocol agreement, or it is recorded as the first duration.

### Eighth Example:

The network device configures the UE with carrier indication information for verification measurement.

The network device configures the carrier indication information of the verification measurement through IE *MeasIdleConfig.* When the EMR measurement result is valid, or is available but invalid, the UE starts to perform verification measurement on the indicated carrier. The indicated carrier may be an NR carrier or an E-UTRAN carrier, and the indication manner may be as follows:
first manner: indicating a certain carrier in the EMR measurement configuration;
second manner: newly adding EMR carrier priority information in IE *MeasIdleConfig,* and then configuring enhanced measurement carrier indication information (P), that is, the UE needing to measure the EMR carrier with a priority higher than or equal to P.

For example, the network device 102 may also configure carrier indication information related to the set carrier in the verification measurement in the measurement configuration information carried by IE *MeasIdleConfig.*

When the first measurement result is the first state or the second state, the user equipment 101 may perform verification measurement on the set carrier, where the set carrier may be an NR carrier or an E-UTRAN carrier.

Optionally, the manner of indicating the set carrier may be one of the following:
the set carrier is a certain carrier among at least one carrier on which the early measurement is performed in the measurement configuration information;
the priority level information of the carrier is newly added in the measurement configuration information, and the set level (P) is configured. The user equipment 101 performs measurement on the carrier with a priority level higher than or equal to P.

Based on the same concept as the above method embodiments, the embodiment of the present disclosure also provides an apparatus for sending an early measurement report, which may have the function of the user equipment 101 in the above method embodiments, and may be used to execute the steps performed by the user equipment 101 provided in the above method embodiments. The function may be implemented by hardware, or by software or hardware executing corresponding software. The hardware or software includes one or more modules corresponding to the above functions.

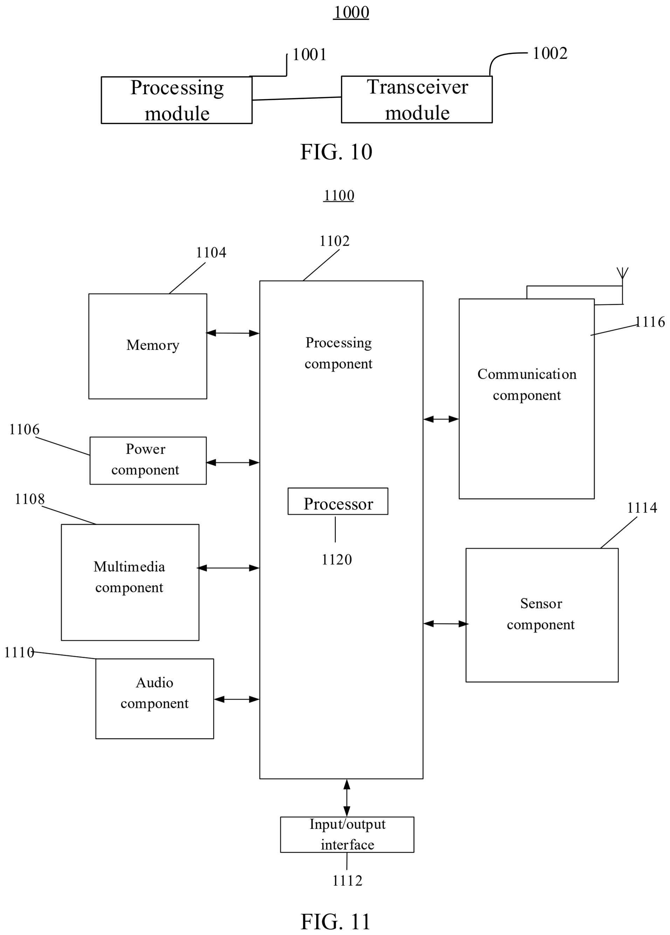

In a possible implementation, the apparatus 1000 shown in FIG. 10 may be used as the user equipment 101 involved in the above method embodiments, and execute the steps performed by the user equipment 101 in the above method embodiments. As shown in FIG. 10, the apparatus 1000 may include a processing module 1001 and a transceiver module 1002 coupled to each other, where the processing module 1001 may be used for the communication apparatus to perform processing operations, such as generating information/messages to be sent, or processing received signals to obtain information/messages. The transceiver module 1002 may be used to support the communication apparatus to communicate.

When executing the steps implemented by the user equipment 101, the processing module 1001 is configured to determine a state of a first measurement result at a first time, where the first measurement result is a measurement result of an early measurement performed by the user equipment before the first time.

The transceiver module 1002 is configured to send a corresponding early measurement report (EMR) to the network device 102 according to the state of the first measurement result.

When the apparatus for receiving configuration information is the user equipment 101, its structure may also be as shown in FIG. 11. The apparatus 1100 may be a mobile phone, a computer, a digital broadcast terminal, a messaging device, a game console, a tablet device, a medical device, a fitness device, a personal digital assistant, etc.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 generally controls the overall operation of the apparatus 1100, such as operations associated with display, phone calls, data communications, camera operations, and recording operations. The processing component 1102 may include one or more processors 1120 to execute instructions to complete all or part of the steps of the above-mentioned methods. In addition, the processing component 1102 may include one or more modules to facilitate the interaction between the processing component 1102 and other components. For example, the processing component 1102 may include a multimedia module to facilitate the interaction between the multimedia component 1108 and the processing component 1102.

The memory 1104 is configured to store various types of data to support operations on the apparatus 1100. Examples of such data include instructions for any application or method operating on the apparatus 1100, contact data, phone book data, messages, pictures, videos, etc. The memory 1104 can be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1106 provides power to the various components of the apparatus 1100. The power component 1106 may include a power management system, one or more power supplies, and other components associated with generating, managing, and distributing power to the apparatus 1100.

The multimedia component 1108 includes a screen that provides an output interface between the apparatus 1100 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1108 includes a front camera and/or a rear camera. When the apparatus 1100 is in an operating mode, such as a photographing mode or a video mode, the front camera and/or the rear camera may receive external multimedia data. Each front camera and rear camera may be a fixed optical lens system or have a focal length and optical zoom capability.

The audio component 1110 is configured to output and/or input audio signals. For example, the audio component 1110 includes a microphone (MIC), and when the apparatus 1000 is in an operating mode, such as a call mode, a recording mode, and a speech recognition mode, the microphone is configured to receive an external audio signal. The received audio signal can be further stored in the memory 1104 or sent via the communication component 1116. In some embodiments, the audio component 1110 also includes a speaker for outputting audio signals.

The I/O interface 1112 provides an interface between the processing component 1102 and peripheral interface modules, such as a keyboard, a click wheels, buttons, etc. These buttons may include but are not limited to: a home button, a volume button, a start button, and a lock button.

The sensor assembly 1114 includes one or more sensors for providing various aspects of the state assessment of the apparatus 1100. For example, the sensor assembly 1114 can detect the open/closed state of the apparatus 1100, the relative positioning of components, such as the display and keypad of the apparatus 1100, the sensor assembly 1114 can also detect the position change of the apparatus 1100 or a component of the apparatus 1100, the presence or absence of user contact with the apparatus 1100, the orientation or acceleration/deceleration of the apparatus 1100, and the temperature change of the apparatus 1100. The sensor assembly 1114 can include a proximity sensor configured to detect the presence of a nearby object without any physical contact. The sensor assembly 1114 can also include an optical sensor, such as a CMOS or CCD image sensor, for use in imaging applications. In some embodiments, the sensor assembly 1114 can also include an accelerometer, a gyroscope sensor, a magnetic sensor, a pressure sensor, or a temperature sensor.

The communication component 1116 is configured to facilitate wired or wireless communication between the apparatus 1100 and other devices. The apparatus 1100 can access a wireless network based on a communication standard, such as WiFi, 2G or 3G, or a combination thereof. In an exemplary embodiment, the communication component 1116 receives a broadcast signal or broadcast-related information from an external broadcast management system via a broadcast channel. In an exemplary embodiment, the communication component 1116 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 1100 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned methods.

In an exemplary embodiment, a non-transitory computer-readable storage medium including instructions is also provided, such as a memory 1104 including instructions, and the instructions can be executed by the processor 1120 of the apparatus 1100 to perform the above methods. For example, the non-transitory computer-readable storage medium can be a ROM, a random access memory (RAM), a CD-ROM, a magnetic tape, a floppy disk, an optical data storage device, etc.

Based on the same concept as the above method embodiments, the embodiment of the present disclosure also provides an apparatus for receiving an early measurement report, which may have the function of the network device 102 in the above method embodiments, and may be used to execute the steps performed by the network device 102 provided in the above method embodiments. The function may be implemented by hardware, or by software or hardware executing corresponding software. The hardware or software includes one or more modules corresponding to the above functions.

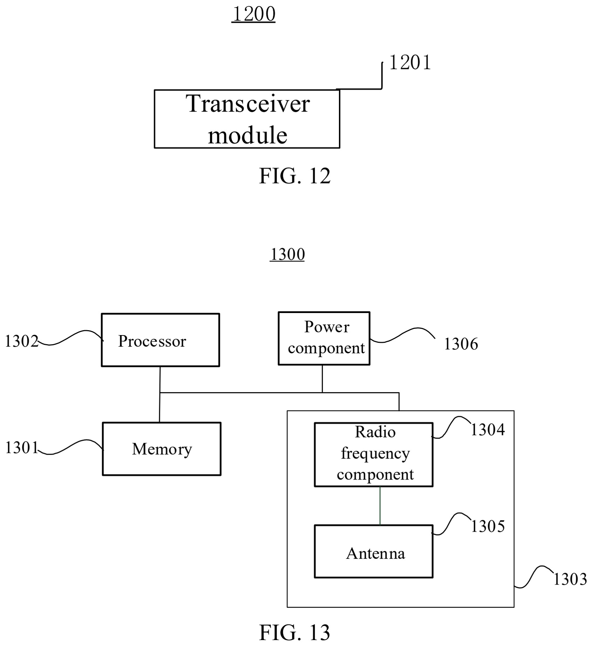

In a possible implementation, the communication apparatus 1200 shown in FIG. 12 may be used as the network device 102 involved in the above method embodiments, and execute the steps performed by the network device 102 in the above method embodiments. As shown in FIG. 12, the communication apparatus 1200 may include a transceiver module 1201, where the transceiver module 1201 may be used to support the communication apparatus to communicate.

When executing the steps implemented by the network device 102, the transceiver module 1201 is configured to receive an EMR sent by the user equipment 101, where the EMR corresponds to a state of a first measurement result of an early measurement performed by the user equipment 101 before a first time.

When the communication apparatus is the network device 102, its structure can also be shown in FIG. 13. The base station is taken as an example to illustrate the structure of the communication apparatus. As shown in FIG. 13, the apparatus 1300 includes a memory 1301, a processor 1302, a transceiver component 1303, and a power component 1306. The memory 1301 is coupled to the processor 1302, and can be used to store the programs and data necessary for the communication apparatus 1300 to implement various functions. The processor 1302 is configured to support the communication apparatus 1300 to perform the corresponding functions in the above methods, and the functions can be implemented by calling the program stored in the memory 1301. The transceiver component 1303 can be a wireless transceiver, which can be used to support the communication apparatus 1300 to receive signaling and/or data through a wireless air interface, and send signaling and/or data. The transceiver component 1303 may also be called a transceiver unit or a communication unit. The transceiver component 1303 may include a radio frequency component 1304 and one or more antennas 1305, where the radio frequency component 1304 may be a remote radio unit (RRU), which can be used for transmission of radio frequency signals and conversion of radio frequency signals and baseband signals, and the one or more antennas 1305 can be used for radiation and reception of radio frequency signals.

When the communication apparatus 1300 needs to send data, the processor 1302 can perform baseband processing on the data to be sent, and then output the baseband signal to the RF unit. The RF unit performs RF processing on the baseband signal and then sends the RF signal in the form of electromagnetic waves through the antenna. When data is sent to the communication apparatus 1300, the RF unit receives the RF signal through the antenna, converts the RF signal into a baseband signal, and outputs the baseband signal to the processor 1302. The processor 1302 converts the baseband signal into data and processes the data.

Those skilled in the art will readily appreciate other implementations of the embodiments in the present disclosure after considering the specification and practicing the contents disclosed herein. The present disclosure is intended to cover any variations, uses, or adaptations of the embodiments in the present disclosure, which follow the general principles of the embodiments in the present disclosure and include common knowledge or customary technical means in the art that are not disclosed in the present disclosure. The specification and examples are to be considered merely as exemplary, and the true scope and spirit of the embodiments in the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial applicability

In the methods disclosed herein, the user equipment determines the state of the first measurement result of the early measurement, and then sends the corresponding EMR to the network device according to whether the state of the first measurement result is reliable, so as to provide the network device with relevant information of the referable measurement result, which is conducive to the rapid establishment of the connection or the reasonable operation of the network device.

## Claims

1. A method for sending an early measurement report, performed by a user equipment, wherein the method comprises:
determining a state of a first measurement result at a first time, wherein the first measurement result is a measurement result of an early measurement performed by the user equipment before the first time; and
sending a corresponding early measurement report (EMR) to a network device according to the state of the first measurement result.

2. The method according to claim 1, wherein determining the state of the first measurement result at the first time comprises:
determining the state of the first measurement result according to at least one of the first time and a first duration.

3. The method according to claim 2, wherein the first duration is a measurement result valid duration defined by a protocol.

4. The method according to claim 2, wherein the first duration is a running duration of a first timer configured by the network device, and the running duration of the first timer corresponds to a valid duration of the measurement result.

5. The method according to claim 2, wherein a start time of the first duration is an end time of running of a second timer, and a running duration of the second timer corresponds to a measurement duration of the early measurement; or
the start time of the first duration is a time when a measurement result of a last early measurement is obtained.

6. The method according to any one of claims 2 to 5, wherein determining the state of the first measurement result according to at least one of the first time and the first duration comprises at least one of:
in response to that the first time is within a range of the first duration, determining that the state of the first measurement result is a first state, wherein the first state is used to indicate that the first measurement result is valid;
in response to that the first time is outside the range of the first duration and an available measurement result exists, determining that the state of the first measurement result is a second state, wherein the second state is used to indicate that the first measurement result is invalid and the available measurement result exists;
in response to that the first time is outside the range of the first duration and no available measurement result exists in the user equipment, determining that the state of the first measurement result is a third state, wherein the third state is used to indicate that the measurement result of the early measurement is invalid.

7. The method according to claim 6, wherein sending the corresponding early measurement report (EMR) to the network device according to the state of the first measurement result comprises:
in response to that the state of the first measurement result is the first state, according to a set carrier configured by the network device, determining whether to perform a verification measurement on the set carrier;
sending the EMR to the network device according to at least one of a state of the first measurement result at a second time, a second measurement result obtained by performing the verification measurement on the set carrier, and whether to perform the verification measurement, wherein the EMR comprises the first measurement result or the second measurement result.

8. The method according to claim 6, wherein sending the corresponding early measurement report (EMR) to the network device according to the state of the first measurement result comprises:
in response to that the state of the first measurement result is the second state, according to a set carrier configured by the network device, determining whether to perform a verification measurement on the set carrier;
sending the EMR to the network device according to whether a second measurement result of the verification measurement is obtained at a second time, wherein the EMR comprises the second measurement result or indication information for indicating that the measurement result is invalid.

9. The method according to claim 7 or 8, wherein the second time is after the user equipment receives msg4 sent by the network device during a random access process.

10. The method according to claim 6, wherein sending the corresponding early measurement report (EMR) to the network device according to the state of the first measurement result comprises:
in response to that the state of the first measurement result is the third state, sending the EMR to the network device, wherein the EMR comprises indication information for indicating that the measurement result is invalid.

11. The method according to any one of claims 1 to 10, wherein the first time satisfies at least one of:
at or after an end time of a running duration of a second timer;
after receiving a paging message;
after sending msg1 to the network device during a random access process.

12. The method according to any one of claims 1 to 11, wherein sending the corresponding early measurement report (EMR) to the network device comprises:
after receiving msg4 of a random access process, sending msg5 to the network device, wherein the msg5 comprises the EMR.

13. The method according to any one of claims 1 to 12, wherein the method further comprises:
receiving measurement configuration information sent by the network device, wherein the measurement configuration information comprises at least one of:
at least one carrier corresponding to the early measurement;
a running duration of a first timer;
a running duration of a second timer;
a set carrier corresponding to a verification measurement;
a priority level corresponding to the at least one carrier.

14. The method according to claim 13, wherein the set carrier is one of:
one or more of the at least one carrier;
one or more carriers with a priority level higher than or equal to a set level in the at least one carrier.

15. A method for receiving an early measurement report, performed by a network device, wherein the method comprises:
receiving an EMR sent by a user equipment, wherein the EMR corresponds to a state of a first measurement result of an early measurement performed by a user equipment before a first time.

16. The method according to claim 15, wherein the method further comprises:
sending measurement configuration information to the user equipment, wherein the measurement configuration information comprises at least one of:
at least one carrier corresponding to the early measurement;
a running duration of a first timer;
a running duration of a second timer;
a set carrier corresponding to a verification measurement;
a priority level corresponding to the at least one carrier;
wherein the running duration of the first timer corresponds to a valid time of a measurement result, and the running duration of the second timer corresponds to a measurement duration of the early measurement.

17. The method according to claim 16, wherein the set carrier is one of:
one or more of the at least one carrier; one or more carriers with a priority level higher than or equal to a set level in the at least one carrier.

18. The method according to any one of claims 15 to 17, wherein the EMR comprises one of:
a first measurement result;
a second measurement result;
indication information used to indicate that a measurement result is invalid;
wherein the second measurement result is a measurement result corresponding to a verification measurement performed by the user equipment on a set carrier.

19. The method according to any one of claims 15 to 18, wherein receiving an EMR sent by a user equipment in an idle state or an inactive state comprises:
receiving msg5 sent by the user equipment, wherein the msg5 comprises the EMR.

20. An apparatus for sending an early measurement report, configured in a user equipment, wherein the apparatus comprises:
a processing module, configured to determine a state of a first measurement result at a first time, wherein the first measurement result is a measurement result of an early measurement performed by the user equipment before the first time;
a transceiver module, configured to send a corresponding early measurement report (EMR) to a network device according to the state of the first measurement result.

21. An apparatus for receiving an early measurement report, configured in a network device, wherein the apparatus comprises:
a transceiver module, configured to receive an EMR sent by a user equipment, wherein the EMR corresponds to a state of a first measurement result of an early measurement performed by the user equipment before a first time.

22. A user equipment, comprising a processor and a memory, wherein:
the memory is configured to store computer programs;
the processor is configured to execute the computer programs to implement the method according to any one of claims 1 to 14.

23. A network device, comprising a processor and a memory, wherein:
the memory is used to store computer programs;
the processor is configured to execute the computer program to implement the method according to any one of claims 15 to 19.

24. A computer-readable storage medium, wherein the computer-readable storage medium stores instructions, and when the instructions are called and executed on a computer, the computer executes the method according to any one of claims 1 to 14.

25. A computer-readable storage medium, wherein the computer-readable storage medium stores instructions, and when the instructions are called and executed on a computer, the computer executes the method according to any one of claims 15 to 19.
